# EUROPÄISCHE PATENTSCHRIFT

(11) **EP 1 934 065 B1**
(45) Veröffentlichungstag und Bekanntmachung des Hinweises auf die Patenterteilung: **26.08.2009**
(21) Anmeldenummer: 06792372.2
(22) Anmeldetag: 05.10.2006
(51) Int. Cl.: B60H 3/06, B60H 1/00

(54) **LUFTFILTER FÜR EINE BELÜFTUNGSANLAGE EINES KRAFTFAHRZEUGS**
AIR FILTER FOR A VENTILATION SYSTEM OF A MOTOR VEHICLE
FILTRE A AIR POUR UN SYSTEME DE VENTILATION D'UN VEHICULE AUTOMOBILE

(30) Priorität: 12.10.2005 DE 102005048841
(43) Veröffentlichungstag der Anmeldung: 25.06.2008
(73) Patentinhaber: Daimler AG, 70327 Stuttgart (DE)
(72) Erfinder: AROLD, Klaus, 71069 Sindelfingen (DE)
(74) Vertreter: Moore, David Simon
(86) Internationale Anmeldenummer: PCT/EP2006/009619
(87) Internationale Veröffentlichungsnummer: WO 2007/042194

(56) Entgegenhaltungen:
- EP-A2- 1 172 240
- DE-C1- 4 234 047
- DE-U1-202005 013 646
- US-A- 4 093 119
- US-A- 6 129 140

## Beschreibung

Die Erfindung betrifft einen Luftfilter für eine Belüftungsanlage eines Kraftfahrzeugs mit den Merkmalen des Oberbegriffs des Patentanspruchs 1.

Ein derartiger Filter ist in der DE 42 34 047 C1 offenbart. Ein solcher Luftfilter weist einen Filterrahmen und ein in diesem Filterrahmen vollständig umlaufend befestigtes Filtermedium auf. Ein derartiger Filter wird zur Montage im Luftkanal der Belüftungsanlage entlang seiner flächigen Erstreckung in einen Aufnahmeschacht der Belüftungsanlage eingeschoben. Dabei sind zum Führen des Luftfilters beim Einschieben im Gehäuse des Luftkanals Vertiefungen vorgesehen, welche als Schiebeführungen fungieren und den Luftfilter in montiertem Zustand in und entgegen der Durchströmungsrichtung des Luftfilters abstützen. Da bei parallel zueinander ausgerichteten Schiebeführungen durch die gegebenen großen Anlageflächen entlang der Schiebeführungen am Einschiebeschacht große Montagekräfte zu Erwarten sind, sind bei dem offenbarten Luftfilter schräg aufeinander zulaufende Schiebeführungen und Außenflächen des Filterrahmens vorgesehen.

Aufgabe der Erfindung ist es, einen einfach zu montierenden und im montierten Zustand gut lagegesicherten Luftfilter zu schaffen.

Die Aufgabe wird durch einen Luftfilter mit den Merkmalen des Patentanspruchs 1 gelöst. Ein solcher Luftfilter weist einen Filterrahmen mit einem darin befestigten Filtermedium auf, wobei der Filter entlang seiner flächigen Erstreckung in einen Aufnahmeschacht einer Belüftungsanlage einschiebbar ist. Im eingeschobenen, montierten Zustand ist der Filter entlang der eingeschobenen Bereiche des Filterrahmens zwischen Filterrahmen und gegenüberliegend angeordneten Wänden des Einschiebeschachtes gedichtet. Um besonders niedrige Montagekräfte beim Einschieben des Luftfilters in den zugehörigen Einschiebeschacht der Belüftungsanlage zu erreichen, weist der Filter unter Verzicht auf besonders ausgestaltete, mit Schiebeführungen des Einschiebeschachtes in Verbindung stehenden Wirkflächen in der der Einschieberichtung zugewandten Stirnseite des Filterrahmens mindestens einen Führungsschacht auf, der in Einschieberichtung ausgerichtet ist. Durch das Einschieben des Luftfilters entlang seiner flächigen Erstreckung, also quer zu seiner Durchstömungsrichtung ist ein Filterwechsel mit besonders geringem Bauraumanspruch gegeben.

Ein derartiger Luftfilter ermöglicht es, dass Führungszapfen, welche am Gehäuse der Belüftungsanlage im Einschiebeschacht vorgesehen sind, beim Einschieben des Filters mit dem Führungsschacht des Filterrahmens in Eingriff kommen, und diesen beim Einschieben besonders kraftarm führen und in eingeschobener, montierter Einbaulage fixieren. Neben der besonders kraftarmen Einschiebbarkeit des Luftfilters ermöglicht der Führungsschacht am Filterrahmen ein besonders freies Einführen des Luftfilters in den Einschiebeschacht der Belüftungsanlage, da der Luftfilter je nach Länge eines zugehörigen Führungszapfens erst sehr spät, und insbesondere nur im Bereich dieses Führungszapfens, also im Bereich der in Einschieberichtung zugewandten Stirnseite des Führungsrahmen geführt ist und insbesondere mit dem entgegengesetzten Ende, also der der Einschieberichtung abgewandten Stirnseite des Filterahmens noch seitlich beweglich ist. Somit kann der Luftfilter beim Einschieben in einen Einschiebeschacht der Belüftungsanlage entlang seiner flächigen Erstreckung beispielsweise auch entlang einer leichten Kurve, oder zum Herumführen um bauliche Hindernisse oder Kanten auch in kleinem Maße quer zur flächigen Erstreckung des Luftfilters bewegt werden. Insbesondere ein durch seitliche Vertiefungen führender Einschiebeschacht verhindert sofern er den Filter in montierter Stellung fixiert eine derartige Beweglichkeit.

Des Weiteren ermöglicht ein derartiger Luftfilter durch die Möglichkeit des Verzichtes auf seitliche Führungsvertiefungen am Gehäuse der Belüftungsanlage im Bereich des Einschiebeschachtes eine besonders einfache und bauraumsparende Gestalt des Gehäuses der Belüftungsanlage.

Des Weiteren werden Geräuschentstehungen an zugehörigen Kanten, insbesondere bei in bestimmten Ausstattungvarianten nicht montiertem Luftfilter, vermieden. Da ein derartiger Luftfilter es ermöglicht einen am Rahmen umlaufenden Führungsabsatz am Filter, welcher durch seine große laufende Länge isgesamt auch eine große Verdeckungsfläche aufweist, durch einen eine relativ kleine Verdeckung aufweisenden Führungszapfen zu ersetzten, bewirkt ein derartiger Filter eine Verbesserung des luftseitigen Widerstands und der Geräuschentstehung der Belüftungsanlage.

Um eine vorgegebene Einbaulage des Luftfilters im Einschiebeschacht zu sichern, ist bei einer besonderen Ausführungsform des Luftfilters der Führungsschacht in der der Einschieberichtung zugewandten Stirnseite des Filterrahmens außerhalb der Flächenmitte angeordnet. Dadurch ist vermieden, dass der Luftfilter in einer verdrehten Einbaulage einbaubar ist. Sind mehrere Einschiebeschächte in der der Einschieberichtung zugewandten Stirnseiten des Filters vorgesehen, so sind diese bezüglich der Flächenmitte in unsymmetrisch zueinander angeordneter Anordnung vorzusehen, um diesen Effekt zu erreichen.

Um einen besonders kostengünstigen und leichten Filteraufbau zu ermöglichen ist ein Filtermedium vorgesehen, welches ein plissiertes, also in Falten gelegtes Filterflies aufweist. Dadurch ist des Weiteren eine besonders große flächige Erstreckung des Filtermediums ermöglicht.

Um am Filter eine Verletzung des plissierten Filtermediums durch umliegende Hindernisse oder Kanten beim Einschieben des Luftfilters in den Einschiebeschacht der Belüftungsanlage zu vermeiden, ist bei einer besonderen Ausgestaltung des Luftfilters die Plissierung des Filters mit der länglichen Erstreckung ihres Knickes, beziehungsweise der Umlegekanten in Einschieberichtung des Filters ausgerichtet. Dadurch ist vermieden, dass kantige Hindernisse quer zu den Falten des Filters am Filtermedium zum Eingriff kommen. Desweiteren kann der im Führungsschacht in Eingriff kommende Führungszapfen ohne besondere Einrichtung des Filtermediums oder Filterrahmens zwischen den Falten der Plissierung angeordnet werden.

Bei einer besonderen Ausführungsform des Luftfilters ist vorgesehen, dass der Führungsschacht mit seiner vollen flächigen Erstreckung entlang der der Einschieberichtung zugewandten Stirnseite, also quer zur Einschieberichtung in einer Falte der Plissierung, also ohne Überschneidung mit dem Filtermedium zwischen zwei Lagen des plissierten Filtermediums angeordnet ist. Des Weiteren ist dadurch eine besonders einfache Montage des Filtermediums im Filterrahmen ohne weiteren Beschnitt entlang der den Führungsschacht umgebenden flächigen Innenbereiche des Filterrahmens ermöglicht. Bei einer offenen Bauweise des Führungsschachtes ermöglicht eine derartige Anordnung eine vollständige Abdichtung des Filtermediums entlang seiner umlaufenden Befestigung im Filterrahmen. Des Weiteren vermeidet eine derartige Anordnung bei einer offenen Bauweise des Führungsschachtes eine Verletzung des Filtermediums durch einen in den Führungsschacht eintauchenden Führungszapfen der zugehörigen Belüftungsanlage.

Bei einer besonderen Ausgestaltung des Luftfilters ist der Führungsschacht in der Falte der Plissierung in eine Richtung von der Öffnung der Falte zum Grund der Falte hin vor der Dichtung des Filterrahmens angeordnet. Somit ist der Führungsschacht im Filterrahmen beidseitig der Wand des Filterrahmens jeweils vor beziehungsweise hinter der Dichtung des Luftfilters angeordnet. Insbesondere bei einer offenen Bauweise des Führungsschachtes ist somit eine Umströmung des Filters durch die Öffnung des Filterschachtes hindurch vorbei an Dichtung und Filtermedium vermieden.

In einer einfachsten Bauweise ist der Führungsschacht als lochartiger Durchbruch des Filterrahmes gestaltet. An diesem lochartigen Durchbruch des Filterrahmens kann ein zugeordneter Führungszapfen der Lüftungsanlage den Filter mindestens in und entgegen der Durchströmungsrichtung, insbesondere jedoch allseitig abstützend zum Anliegen kommen.

Dabei kann der lochartige Druchbruch durch eine entsprechende Einbuchtung am Filterrahmen gebildet, oder auch vom Filterrahmen vollständig umlaufend begrenzt sein.

Um eine sichere Abdichtung des Luftfilters zu bewirken, weist eine Ausführungsform des Luftfilters einen Führungsschacht auf, der von einer muldenförmigen Vertiefung des Filterrahmens gebildet ist. Dadurch ist eine Umströmung des Luftfilters durch einen lochartigen Durchbruch hindurch vermieden.

Weitere vorteilhafte Ausgestaltungen des Luftfilters ergeben sich aus Kombinationen oben genannter Ausführungsformen, sowie aus der Zeichnung und ihrer Beschreibung.

Dabei zeigen:
- Fig. 1: eine Schnittdarstellung durch eine Ausführungsform des Filters mit Schnittebene quer zur Einschieberichtung, und
- Fig. 2: eine Schnittdarstellung dieser Ausführungsform entsprechend dem Schnitt II-II aus Figur 1.

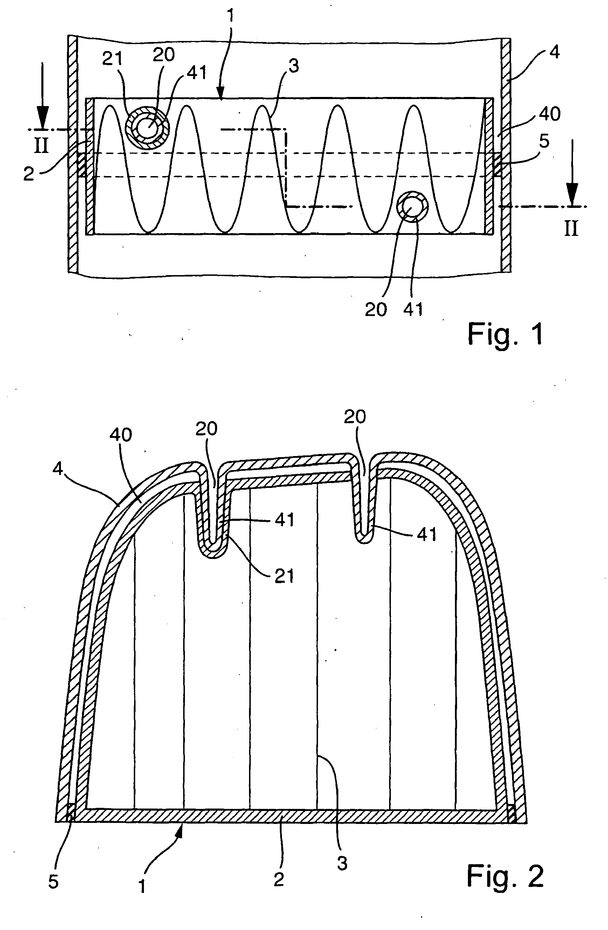

Figur 1 zeigt eine Schnittdarstellung eines Luftfilters 1 im montierten Zustand in einer Belüftungsanlage, von der nur bereichsweise ein vom Luftfilter 1 durchsetzter Luftkanal 4 dargestellt ist. Die der Darstellung zu Grunde liegende Schnittebene ist quer zur flächigen Erstreckung des Luftfilters 1 und parallel zur Einschiebeöffnung des Einschiebeschachtes 40 der Belüftungsanlage 4 angeordnet. Die Blickrichtung ist somit in Einschieberichtung des Luftfilters 1 in den Einschiebeschacht 40 von der Einschiebeöffnung im Einschiebeschacht 40 weg gerichtet. Der Luftfilter 1 weist einen Luftfilterrahmen 2 auf, welcher beispielsweise aus textilem oder Pappmaterial oder auch als Kunststoffspritzgussteil gefertigt sein kann. Im Rahmen 2 ist ein Filtermedium 3 befestigt, welches als plissiertes Filterflies ausgeführt ist. Das Filtermedium 3 ist im Rahmen 2 des Luftfilters vollständig umlaufend uns somit dicht entlang der Innenseite der den Luftfilterrahmen 2 bildenden Wände befestigt. Die Plissierung des Filtermediums 3 ist mit den Umlegekanten der Plissierung in Einschieberichtung ausgerichtet. Zwischen Filterrahmen 2 und dem umgebenden Gehäuse der Belüftungsanlage 4 ist der Luftfilter 1 mittels einer im eingeschobenen Bereich umlaufenden Dichtung 5 abgedichtet. Das Gehäuse der Belüftungsanlage weist in dem vom Luftfilter 1 durchsetzten Bereich einen Einschiebeschacht 40 auf, dessen Wände einen mit den in Durchströmungsrichtung vor- und nachgelagerten Wänden des Luftkanals im Wesentlichen durchgehenden kantenfreien Verlauf aufweisen. Wird beispielsweise im Rahmen von Ausstattungsvarianten auf die Montage eines Luftfilters verzichtet, sind im Luftkanal der Belüftungsanlage 4 keine geräusch- oder luftwiderstanderzeugenden Gehäusekanten gegeben.

Der hier im montierten Zustand gezeigte Luftfilter 1 weist in der in Einschieberichtung vorne liegenden Stirnwand des Filterrahmens 2 Führungsschächte 20 auf, welche im gezeigten Ausführungsbeispiel in zwei verschiedenen Ausgestaltungen dargestellt sind. Die Führungsschächte 20 weisen jeweils einen kreisförmig berandeten Querschnitt auf, in welchen ein runder Führungszapfen 41 des Gehäuses der Belüftungsanlage 4 eintaucht. Durch die kleinen Reibflächen einer derartigen Führung ist der Luftfilter 1 beim Einschieben in den Einschiebeschacht 40 der Belüftungsanlage besonders kraftarm geführt und im montierten Zustand sicher fixiert. Die beiden außermittig vorgesehenen Führungsschächte 20 des Luftfilters 1 sind in der Querschnittsfläche des Luftfilters 1 quer zur Einschieberichtung unsymmetrisch zur zugehörigen Flächenmitte angeordnet, so dass der Luftfilter 1 mit den Einschiebeschächten 20 nur in einer Einbaulage auf die zugehörigen Führungszapfen 41 des Gehäuses der Belüftungsanlage 4 aufschiebbar und montierbar ist.

Der Luftfilter 1 stützt sich im montierten Zustand insbesondere in und entgegen seiner Durchströmungsrichtung über die Führungsschächte 20 and den Führungszapfenen 41 des Gehäuses der Belüftungsanlage 4 ab. Die beiden Führungsschächte 20 des Filterrahmens 2 sind unterschiedlich ausgeführt. Einer der Einschiebeschächte ist durch eine am Führungsrahmen 2 vorgesehene muldenartige Vertiefung begrenzt. Diese kann bei entsprechender Dicke des Filterrahmens 2 und kurzer länglicher Erstreckung des Führungszapfens 41 in Einschieberichtung in dessen Dickenerstreckung angeordnet sein. Im dargestellten Ausführungsbeispiel ist der Führungsschacht 20 von einer domförmigen Ausstellung des Filterrahmens begrenzt, welche durch ein am Filterrahmen 2 angebrachtes Klebeteil oder bei einer formgebenden Fertigung des Führungsrahmens 2 an der dortigen Wand des Filterrahmens 2 vorgesehen sein kann.

Der andere Aufnahmeschacht 20 ist durch einen lochartigen Durchbruch des Filterrahmens 2 begrenzt. Dieser lochartige Durchbruch ist durch einen kreisförmigen Ausschnitt des Filterrahmens 2 gebildet. Die Führungsschächte 20 des Führungsrahmens 2 sind mit ihrer vollen flächigen Erstreckung in einer Falte des plissierten Filtermediums 3 angeordnet. Dadurch kann das Filtermedium 3 an den Führungsschacht 20 begrenzenden Elementen 21 des Führungsrahmens 2 vorbei beziehungsweise an der den Führungsschacht 20 begrenzenden lochartigen Öffnung vorbei, an der Innenseite der den Filterrahmen 2 bildenden Wände besonders einfach umlaufend und dicht befestigt werden. Dabei sind die Führungsschächte 20 weiterhin innerhalb der Falte der Plissierung in einer Richtung von der Öffnung der Falte hin zum Grund der Falte mit ihrer vollständigen flächigen Erstreckung entlang der Wand des Filterrahmens 2 vor der Dichtung 5 des Luftfilters 1 angeordnet. Somit sind sowohl die außenseitige, also an der den Wänden des Gehäuses der Belüftungsanlage zugewandten Seite des Führungsrahmens angeordnete Öffnung des Führungsschachtes 20 als auch eine bei offener Bauweise des Führungsschachtes 20 gegebene innenseitige, also an der dem Filtermedium zugewandten Seite des Führungsrahmens angeordnete Öffnung in Durchströmungsrichtung des Luftfilters auf gleicher Seite stromauf oder stromab sowohl des Filters wie auch der Dichtung angeordnet. Dadurch ist eine Umströmung des Filters über die Öffnung des Führungsschachtes 20 vermieden.

In Figur 2 ist eine Darstellung des Schnittes II-II aus Figur 1 gezeichnet. Der Luftfilter 1 ist wie in Figur 1 in montierter Einbaulage im Gehäuse der Belüftungsanlage 4 gezeigt. Dabei ist der Luftfilter 1 mit seinem Filterrahmen 2, in welchem das plissierte Filtermedium 3 befestigt ist, in den Aufnahmeschacht 40 des Gehäuses der Belüftungsanlage 4 eingeschoben. Der Luftfilter 1 ist in diesem Zustand so angeordnet, dass er entlang der gegenüberliegenden Wände des Einschiebeschachtes 40 über eine Dichtung 5 umlaufend abgedichtet ist, von welcher im gezeigten Schnitt die entlang der Einschiebeöffnung des Einschiebeschachtes 40 abdichtenden Teilbereiche dargestellt sind. Somit durchsetzt der Luftfilter 1 randseitig abgedichtet den vollständigen Strömungsquerschnitt des Luftkanals der Belüftungsanlage 4. An der der Einschieberichtung des Luftfilters zugewandten Stirnseite des Filterrahmens 2 weist der Luftfilter 1 zwei Führungsschächte 20 auf, von denen im gezeigten Ausführungsbeispiel zur Darstellung verschiedener Gestaltungsformen ein Führungsschacht 20 durch eine am Filterrahmen 2 ausgebildete muldenförmige Vertiefung 21 begrenzt ist, sowie ein Führungsschacht 20 durch einen des Filterrahmens 2 begrenzt ist. Der vom lochartigen Durchbruch begrenzte Führungsschacht 20 ermöglicht eine besonders kostengünstige und einfache Bauweise des Luftfilters 1. In beide Führungsschächte 20 ragt ein an der Wand des Gehäuses der Belüftungsanlage 4 angeordneter in beziehungsweise durch den Einschiebeschacht 20 entlang der in Einschieberichtung angeordneten Plissierung des Filtermediums 3. Dabei ragen die Führungszapfen 41 in den Durchströmungsquerschnitt des Filters. Einerseits ist dadurch eine kompakte und platzsparende Ausgestaltung der Bauteile erreicht, andererseits ist das Filtermedium 3 vor Beschädigungen durch die Führungselemente des Gehäuses der Belüftungsanlage 4 geschützt.

## Patentansprüche

1. Luftfilter (1) für eine Belüftungsanlage (4) eines Kraftfahrzeugs mit einem Filterrahmen (2) und einem im Filterrahmen vollständig umlaufend befestigten Filtermedium (3), wobei der Luftfilter entlang seiner flächigen Erstreckung in einen Aufnahmeschacht einschiebbar und mindestens entlang der eingeschobenen Bereiche des Filterrahmens zwischen Filterrahmen und Wänden des Einschiebeschachtes gedichtet ist,
**dadurch gekennzeichnet, dass**
der Filterrahmen (2) in der der Einschieberichtung zugewandten Stirnseite mindestens einen Führungsschacht (20) aufweist, der in Einschieberichtung ausgerichtet ist.

2. Luftfilter nach Anspruch 1,
**dadurch gekennzeichnet, dass**
der Führungsschacht (20) in der der Einschieberichtung zugewandten Stirnseite ausserhalb der Flächenmitte angeordnet ist.

3. Luftfilter nach Anspruch 1 oder 2,
**dadurch gekennzeichnet, dass**
das Filtermedium (3) ein plissiertes Filterfließ aufweist.

4. Luftfilter nach Anspruch 3,
**dadurch gekennzeichnet, dass**
die Plissierung des Filters (1) in Einschieberichtung ausgerichtet ist.

5. Luftfilter nach Anspruch 4,
**dadurch gekennzeichnet, dass**
der Führungsschacht (20) mit seiner vollen flächigen Erstreckung quer zur Einschieberichtung in einer Falte der Plissierung angeordnet ist.

6. Luftfilter nach einem der Ansprüche 1 bis 5,
**dadurch gekennzeichnet, dass**
der Führungsschacht (20) in der Falte der Plissierung in einer Richtung von der Öffnung der Falte zum Grund der Falte hin vor der Dichtung (5) des Filterrahmens (2) angeordnet ist.

7. Luftfilter nach einem der Ansprüche 1 bis 6,
**dadurch gekennzeichnet, dass**
der Führungsschacht (20) als lochartiger Durchbruch des Filterrahmens (2) gestaltet ist.

8. Luftfilter nach einem der Ansprüche 1 bis 6,
**dadurch gekennzeichnet, dass**
der Führungsschacht (20) als muldenförmige Vertiefung des Filterrahmens (2) ausgebildet ist.

## Claims

1. Air filter (1) for a ventilation system (4) of a motor vehicle, with a filter frame (2) and a filter medium (3) completely and continuously attached inside the filter frame, wherein the air filter is insertable into a location duct along its flat dimension and sealed at least along the inserted regions of the filter frame between the filter frame and the walls of the location duct,
**characterised in that**
the filter frame (2) is provided with at least one guide duct (20) oriented in the direction of insertion in the end face facing the direction of insertion.

2. Air filter according to claim 1,
**characterised in that**
the guide duct (20) is located outside the centre in the end face facing the direction of insertion.

3. Air filter according to claim 1 or 2,
**characterised in that**
the filter medium (3) comprises a pleated non-woven filter fabric.

4. Air filter according to claim 3,
**characterised in that**
the pleating of the filter (1) is oriented in the direction of insertion.

5. Air filter according to claim 4,
**characterised in that**
the guide duct (20) is arranged at right angles to the direction of insertion in a fold of the pleating with its full flat dimension.

6. Air filter according to any of claims 1 to 5,
**characterised in that**
the guide duct (20) is arranged in a fold of the pleating in a direction from the opening to the base of the fold in front of the seal (5) of the filter frame (2).

7. Air filter according to any of claims 1 to 6,
**characterised in that**
the guide duct (20) is designed as a hole-like through-opening of the filter frame (2)

8. Air filter according to any of claims 1 to 6,
**characterised in that**
the guide duct (20) is designed as a dished recess of the filter frame (2).

## Revendications

1. Filtre à air (1) pour un système de ventilation (4) d'un véhicule automobile doté d'un cadre de filtre (2) et d'un milieu filtrant (3) fixé sur toute la périphérie dans le cadre de filtre, le filtre à air pouvant être inséré le long de son étendue plane dans une fente de logement et étanchéifié au moins le long des zones insérées du cadre de filtre entre le cadre de filtre et les parois de la fente d'insertion, **caractérisé en ce que** le cadre de filtre (2) présente, sur sa face frontale orientée vers le sens d'insertion, au moins une fente de guidage (20) qui est dirigée dans le sens d'insertion.

2. Filtre à air selon la revendication 10, **caractérisé en ce que** la fente de guidage (20), sur la face frontale orientée dans le sens d'insertion, est disposée à l'extérieur du centre des surfaces.

3. Filtre à air selon la revendication 1 ou 2, **caractérisé en ce que** le milieu filtrant (3) présente une cartouche de filtre plissée.

4. Filtre à air selon la revendication 3, **caractérisé en ce que** la structure plissée du filtre (1) est dirigée dans le sens d'insertion.

5. Filtre à air selon la revendication 4, **caractérisé en ce que** toute l'étendue plane de la fente de guidage (20) est disposée transversalement au sens d'insertion dans un pli de la structure plissée.

6. Filtre à air selon l'une quelconque des revendications 1 à 5, **caractérisé en ce que** la fente de guidage (20) dans la structure plissée est disposée dans le sens de l'ouverture du pli à la base du pli avant le joint d'étanchéité (5) du cadre de filtre (2).

7. Filtre à air selon l'une quelconque des revendications 1 à 6, **caractérisé en ce que** la fente de guidage (20) est conçue en tant qu'ouverture en forme de trou du cadre de filtre (2).

8. Filtre à air selon l'une quelconque des revendications 1 à 6, **caractérisé en ce que** la fente de guidage (20) est formée en tant qu'évidement en forme d'auge du cadre de filtre (2).
